# EUROPEAN PATENT APPLICATION

(11) **EP 2 312 523 A1**
(43) Date of publication of application: **20.04.2011**
(21) Application number: 09773612.8
(22) Date of filing: 01.07.2009
(51) Int. Cl.: G06Q 50/00, G06Q 30/00

(54) **WORK INDEX DATA GENERATION SYSTEM AND VEHICULAR WORK COST ESTIMATION SYSTEM, AND COMPUTER PROGRAM**

(30) Priority: 04.07.2008 JP 2008176130
(71) Applicant: The Jiken Center Co., Ltd, Chiba 272-0001 (JP)
(72) Inventor: FUJITA, Mitsunobu, Ichikawa-shi Chiba 272-0001 (JP); KAWASAKI, Tetsuya, Ichikawa-shi Chiba 272-0001 (JP); UEZONO, Kiyohisa, Ichikawa-shi Chiba 272-0001 (JP); SAITO, Masatake, Ichikawa-shi Chiba 272-0001 (JP)
(74) Representative: Treeby, Philip David William
(86) International application number: PCT/JP2009/062401
(87) International publication number: WO 2010/002034

(57) **Abstract**

To provide an automotive labor cost estimation system with which auto labor costs can be estimated correctly by using Repair Time data suitable for an actual installation topology among automotive parts.

A storage unit 7 contains an installation table 12 storing actual installation topologies among the automotive parts, and a process step allocation table (table) 15 having an allocation rule that specifies how much labor time should be allocated to what kind of automotive part for each work, the allocation rule being stored in relation to the installation table 12 and a parts table 11. When a subject automotive part and its associated work item(s) are provided, a computer 2 estimates auto labor costs based on sourcing costs as well as a labor time allocated in the process step allocation table 15 in relation to the automotive part.

## Description

### Technical Field

The present invention relates to a system for generating a Repair Time data to be used as a rough indication of a labor time or the number of process steps for automotive maintenance or repair services, and an automotive labor cost estimation system that uses the Repair Time data.

### Background Art

In order to calculate reasonable labor costs associated with automotive maintenance or repair services, the Repair Time data have been used that are based on structural investigations of vehicles and time study surveys on repair services. The "Repair Time data" refer to a labor time (rough indication) required for the maintenance and repair to, for example, a normal, 1-2 year old automotive which is not heavily stained or rusted with mileage of 20,000 to 30,000 [km], performed by qualified technicians in a standard repair facility to repair automotive parts in a safe, rational, and economical fashion in consideration of the functions and quality of the subj ect vehicle. The standard repair facility as used herein refers to an ordinary service facility having spot, arc, and gas welders, a simple body frame aligner and other machines and equipment that meet the requirements for certified service facilities. The qualified technicians are those having industry-recognized skill with about three years of work experience: for repair coating, skilled workers with five years of work experience or Grade 2 metal coating qualification.

Some Repair Time data are different from model to model and others are common to all models. The former Repair Time data include "Removing and Replacing Repair Time data" associated with removal and attachment/replacement of damaged parts, and "Painting Repair Time data" for painting of exterior body panels. The latter Repair Time data include "Outer Panel Repair Time data" associated with metal straightening of an exterior body panel, and "Inner Panel Repair Time data" for correcting the structural dimensions of passenger cars using a body frame aligner. By using the Repair Time data as a reference, approximate labor costs can be estimated quickly with objective validity for the automotive maintenance or repair services.

There are various information processing systems in which fundamental data for use in generating the Repair Time data are previously written into a database to estimate auto labor costs by using the fundamental data. For example, in an automotive repair cost estimation system disclosed in Patent-related Document 1, all repairs to the automotive part(s) of a vehicle subjected to repair, such as details of the removal and attachment/replacement of the automotive part (s) are stored as the fundamental data. After a damaged part or parts is/are identified, it is decided exactly what kind of repair should be made for the subject automotive part(s). Then, the sourcing costs for each automotive part and the repair labor time are calculated according to the details of the specified repair, and finally the labor costs (repair costs) are calculated. Thus, a procedure to calculate the labor costs is simplified to achieve an objective and precise estimation.
[Patent-related Document 1] Japanese Patent Laid-open No. 2002-259597

In conventional information processing systems of the type described as typified by the automotive repair cost estimation system described in the Patent-related Document 1, any installation topology among the respective automotive parts is not taken into consideration, regardless of vehicle models. This means that the conventional systems will possibly provide only an estimated labor time that does not reflect the reality. For example, for automotives in which a smaller part is removably attached to a larger part, it is impossible to distinguish between the labor time for a case where the smaller part is removed and attached after detachment of the larger part, and the labor time for a case where the smaller part is removed and attached without any detachment of the larger part. In practice, when the smaller part is in a position that is difficult to access for the removal and attachment, removal and attachment after the detachment of the larger part requires smaller number of process steps, which may result in a shorter labor time and smaller labor costs. Accordingly, the conventional information processing systems do not try to correct the labor costs or, alternatively, a person who makes an estimate would manually correct the labor costs on experiential grounds.

A major object of the present invention is to solve such problems, and to provide a Repair Time data generation system for use in generating Repair Time data in line with the actual installation topology among the respective automotive parts.

Another object of the present invention is to provide an automotive labor cost estimation system, which is capable of correctly estimating auto labor costs by using such Repair Time data.

Yet another object of the present invention is to provide a computer program for achieving a Repair Time data generation system on a computer.

### Summary of the Invention

An automotive Repair Time data generation system according to the present invention is a system for generating Repair Time data to be used as a rough indication of a labor time associated with maintenance or repair of a vehicle, which comprises a first table having an installation topology among a number of automotive parts mounted on said vehicle, the installation topology being of at least one of: a normal installation topology in which any and all automotive parts can be removed independently, a conditional installation topology in which removal and attachment or replacement of one automotive part is necessary in order to remove, attach, or replace the other automotive part, a parent-child installation topology in which it is not necessary to work with one automotive part in order to remove and attach the other automotive part, but the labor time should be recorded for the one automotive part when the other automotive part is to be replaced, and a parent-parent installation topology in which one automotive part or the other automotive part can be removed only after all automotive parts other than one and the other automotive parts are removed, the installation topology being stored in the first table in relation to an installation ID for identifying the installation topology as well as an automotive part ID for identifying the automotive part(s) in relation to that installation topology; a second table having an allocation rule that specifies how much labor time should be allocated to what kind of automotive part for each work, the allocation rule being in relation to a work item ID for identifying each work and the installation ID to which the subject automotive part is related; input reception means for receiving an input about the subject automotive part ID and the work item ID; and processing means for retrieving the installation ID in relation to the entered automotive part ID from said first table, determining said second table defined to the retrieved installation ID that is in relation to said work item ID, and generating said Repair Time data based on the labor time allocated in the defined second table.

In said second table, during the removal and attachment or replacement of a certain automotive part, when any other automotive part than the subject automotive part is associated with, a labor time is allocated with said other automotive part being considered to be removed and attached, in addition to the labor time required for the removal and attachment or replacement of said automotive part. In said second table, said installation ID about an installation topology for installing three or more automotive parts can be included.

In a certain embodiment, the Repair Time data generation system may be configured by further comprising image data holding means for holding symbol images representing in a symbolic manner said normal installation topology, said conditional installation topology, said parent-child installation topology, and said parent-parent installation topology or combined installation topologies of two or more of them with which each automotive part is installed in relation to a plurality of automotive parts, and holding an automotive part map in which these symbol images are represented in perspective; and display controlling means for presenting, on a predetermined display unit, the symbol images or said automotive part map held in this image data holding means. In this case, by means of specifying a symbol image in said automotive part map presented on said display unit, said input reception means can be configured to be adapted to receive an input of the automotive part ID corresponding to that symbol image.

An automotive labor cost estimation system provided by the present invention is an automotive labor cost estimation system for estimating an auto labor costs based on Repair Time data to be used as a rough indication of a labor time associated with maintenance or repair of a vehicle, and sourcing costs for each automotive part, the automotive labor cost estimation system including said first table, said second table, and said input reception means, all of which said Repair Time data generation system comprises, and the automotive labor cost estimation system further including a third table having the sourcing costs for each automotive part stored in relation to said automotive part ID; and processing means for retrieving the installation ID in relation to the automotive part ID received by said input reception means from said first table, determining said second table defined to the retrieved installation ID that is in relation to said work item ID, generating said Repair Time data based on the labor time allocated in the defined second table, retrieving the sourcing costs from the third table in relation to said automotive part ID, and calculating said auto labor costs based on the sourcing costs and said Repair Time data.

A computer program according to the present invention is computer program for use in directing a computer having a storage unit to operate as a Repair Time data generation system for generating Repair Time data to be used as a rough indication of a labor time associated with maintenance or repair of a vehicle, wherein: said computer program makes said storage unit to store a first table having an installation topology among a number of automotive parts mounted on said vehicle, the installation topology being of at least one or a combination of two or more of: a normal installation topology in which any and all automotive parts can be removed independently, a conditional installation topology in which removal and attachment or replacement of one automotive part is necessary in order to remove, attach, or replace the other automotive part, a parent-child installation topology in which it is not necessary to work with one automotive part in order to remove and attach the other automotive part, but the labor time should be recorded for the one automotive part when the other automotive part is to be replaced, and a parent-parent installation topology in which one automotive part or the other automotive part can be removed only after all automotive parts other than one and the other automotive parts are removed, the installation topology being stored in the first table in relation to an installation ID for identifying the installation topology as well as an automotive part ID for identifying the automotive part(s) in relation to that installation topology; and a second table having an allocation rule that specifies how much labor time should be allocated to what kind of automotive part for each work, the allocation rule being in relation to a work item ID for identifying each work and the installation ID to which the subject automotive part is related; and makes said computer to function as input reception means for receiving an input about the subject automotive part ID and the work item ID; and processing means for retrieving the installation ID in relation to the received automotive part ID from said first table, determining said second table defined to the retrieved installation ID that is in relation to said work item ID, and generating said Repair Time data based on the labor time allocated in the defined second table.

In the present invention, installation topologies among the automotive parts are kept as key data for calculating the labor time, rather than allocating the labor time (or the number of process steps) for each automotive part, and it is possible to determine, on a case-by-case basis, the allocated labor time suitable for the actual installation topology depending on, for example, details of the work of removal and attachment or replacement. Accordingly, the Repair Time data suitable for the actual installation topology among the automotive parts can be generated. In addition, the installation topology can be specified in relation to the automotive parts, which indicates operation procedures for the automotive parts in addition to the Repair Time data obtained. This facilitates checking after estimation, makes it possible to accommodate those who do the work.

### Brief Description of the Drawings

Fig. 1 is a configuration diagram of an automotive labor cost estimation system according to one embodiment of the present invention;
Fig. 2 is a view showing an example of an automotive part installation map to be presented on a display unit;
Fig. 3 is a diagram showing correspondence relation between the automotive parts presented on a screen and actual automotive parts (guide image);
Fig. 4 is a view showing different basic installation topologies;
Fig. 5 is a view showing combinations of basic installation topologies;
Fig. 6 is a view showing another example of installation topologies;
Fig. 7 is a view showing an example of a labor time table;
Fig. 8 is a view showing another example of a labor time table;
Fig. 9 is a view showing examples of tables stored in a storage unit;
Fig. 10 is a view showing an example of an estimate table for a case where details of the repair have been determined;
Fig. 11 is a view showing an example of a process step allocation table;
Fig. 12 is a view showing another example of a process step allocation table;
Fig. 13 is a view showing another example of a process step allocation table;
Fig. 14 is a view showing another example of a process step allocation table;
Fig. 15 is a view showing an example of automotive parts and installation topologies;
Fig. 16 is a view illustrating an example of how to account for labor time for deemed removal and attachment;
Fig. 17 is a view illustrating another example of how to account for labor time for deemed removal and attachment;
Fig. 18 is a view illustrating another example of how to account for labor time for deemed removal and attachment;
Fig. 19 is a view illustrating another example of how to account for labor time for deemed removal and attachment;
Fig. 20 is a view illustrating the entire operational procedure for the automotive labor cost estimation system;
Fig. 21 is a detailed flow chart illustrating how to calculate the number of process steps;
Fig. 22 is a detailed flow chart of a "deemed removal and attachment application" subroutine;
Fig. 23 is a detailed flow chart of a "number of process steps calculation" subroutine;
Fig. 24 is a detailed flow chart of a "number of process steps allocation" subroutine;
Fig. 25 is a detailed flow chart of a "parent-child calculation" subroutine;
Fig. 26 is a detailed flow chart of a "deemed removal and attachment collection" subroutine; and
Fig. 27 is a detailed flow chart of a "deemed removal and attachment collection 2" subroutine.

### Modes for carrying out the Invention

Now, an embodiment wherein the present invention is applied to an automotive labor cost estimation system with a function to generate Repair Time data is described.

### [Entire Configuration]

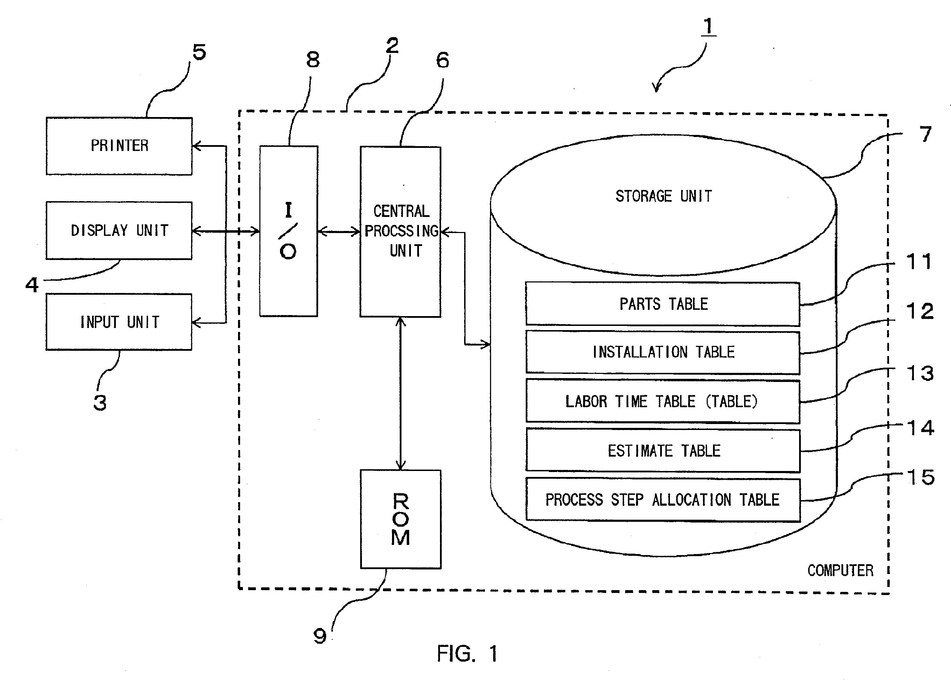

Fig. 1 is a configuration diagram of an automotive labor cost estimation system according to this embodiment. This automotive labor cost estimation system 1 is an information processing system for estimating auto labor costs based on the Repair Time data. It is implemented by cooperating a computer having a storage unit such as a hard disk and a computer program according to the present invention.

In Fig. 1, the automotive labor cost estimation system 1 comprises a computer 2, an input unit 3, a display unit 4, and a printer 5. The computer 2 comprises a central processing unit 6 having a CPU (Central Processing Unit) board, a storage unit 7 such as a hard disk, an I/O (Input/Output control section) 8 that interfaces the computer 2 with the aforementioned components including the input unit 3, and a ROM (Read Only Memory) 9 in which a computer program according to the present invention is stored.

A parts table 11, an installation table 12, a labor time table (table) 13, an estimate table 14, and a process step allocation table 15 are stored in the storage unit 7 in relation to vehicle model IDs for identifying the model of each vehicle. Details of the tables 11 to 15 will be described later. The storage unit 7 also stores therein symbol images of a vehicle, automotive parts, and installation relations between them in a symbolic manner, an automotive part installation map in which these symbol images are represented in perspective, a photographed image of a vehicle, a link image, and other guide images in relation to the vehicle model ID.

The computer program in the ROM 9 makes the storage unit 7 operate as data holding means for parameters of the tables 11 to 15 and the like, the symbol images, automotive part maps and the like, and makes the computer 2 operate as input reception means that is adapted to receive an input to be used for generating the Repair Time data and estimating the labor costs, processing means for carrying out control operations for generating the Repair Time data, calculating an estimated cost, displaying it on the display unit 4, supplying print data to the printer 5, and the like, and display control means for presenting the image data on the display unit 4.

The input reception means receives, via the input unit 3 and the I/O 8, a vehicle ID for identifying a subject vehicle, an automotive part ID for identifying an automotive part, and a work item ID for identifying what kind of work should be made. Operations of the processing means will be described later.

### [Auto Part Installations]

In the automotive labor cost estimation system 1, the display unit 4 produces a screen on the display unit 4 for the user and receives an input from the user through the input unit 3. For the initiation of processing, the system receives a vehicle model ID from the user to determine the subject vehicle model. In this embodiment, a plurality of automotive parts of the vehicle in question as well as installation topology between them are all represented symbolically by symbol images, and these symbol images are represented in perspective into an automotive part installation map to be presented on the display unit 4, which is one of the inventive features.

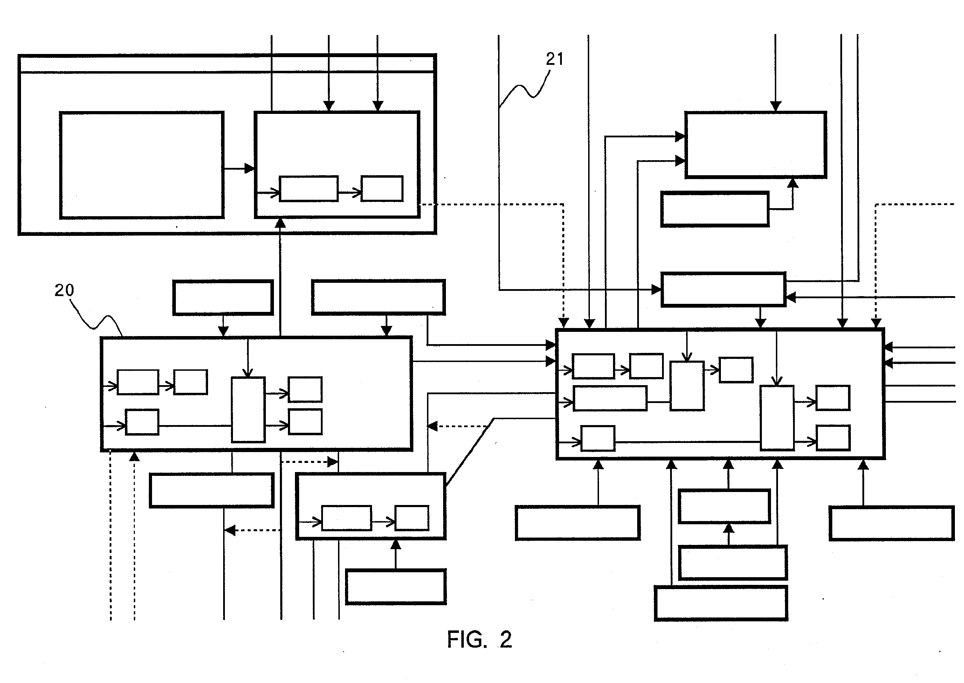

Fig. 2 shows an example of an installation topology map that can be presented on the display unit 4 after the determination of the subject vehicle model. As shown in Fig. 2, each automotive part is represented as a rectangular frame 20 on the display image.

It should be noted that the image representing each automotive part is not necessarily a rectangular frame, and instead, it may have any other shape such as a generally oval shape. The installation topology between the automotive parts is represented by using, in this example, arrowed or non-arrowed line segments 21 connecting between the rectangular frames 20. When the user who manipulates the input unit 3 selects a rectangular frame 20 or a line segment 21, it is considered that the selected one is chosen.

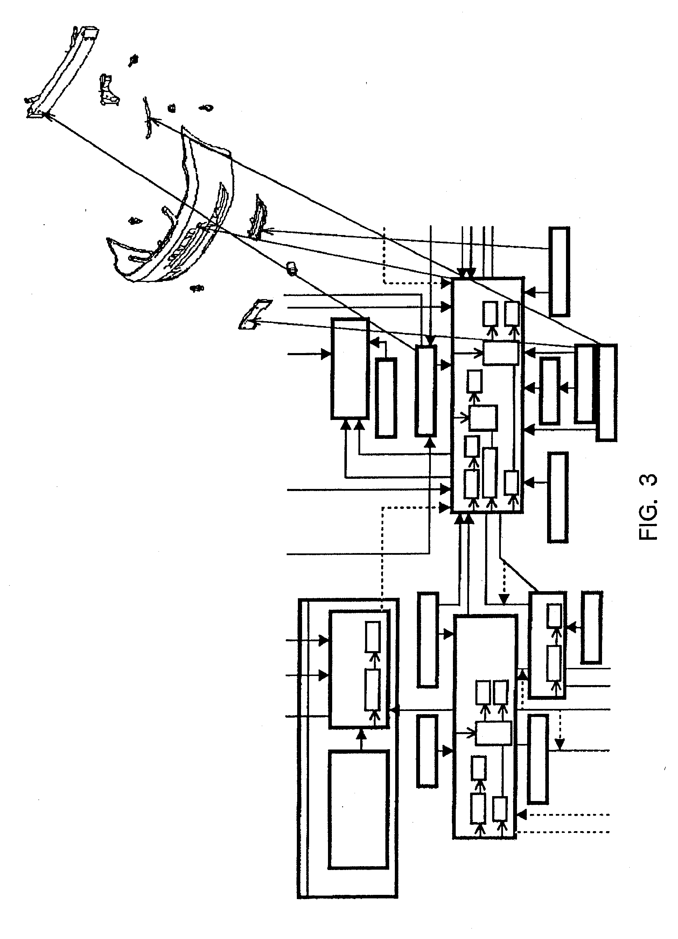

Fig. 3 shows a guide image presented on the display unit 4 in response to an instruction or instructions from the user, the guide image representing which frame indicates which one of the actual automotive parts of a vehicle. The automotive parts included in the guide image correspond to respective one of the rectangular frames 20 on the screen. As apparent from Fig. 3, each rectangular frame 20 corresponds to respective one of automotive parts having a complex shape. It should be noted that two or more automotive parts may be represented as a single rectangular frame 20 for the purpose of simplifying the representation of relation between these automotive parts. Alternatively, when two or more automotive parts are collectively provided, the rectangular frames 20 indicating these automotive parts maybe enclosed in a single rectangular frame 20 in accordance with the supplied format (e. g. , the top left rectangular frame (which is a single rectangular frame having two rectangular frame therein) in Fig. 2).

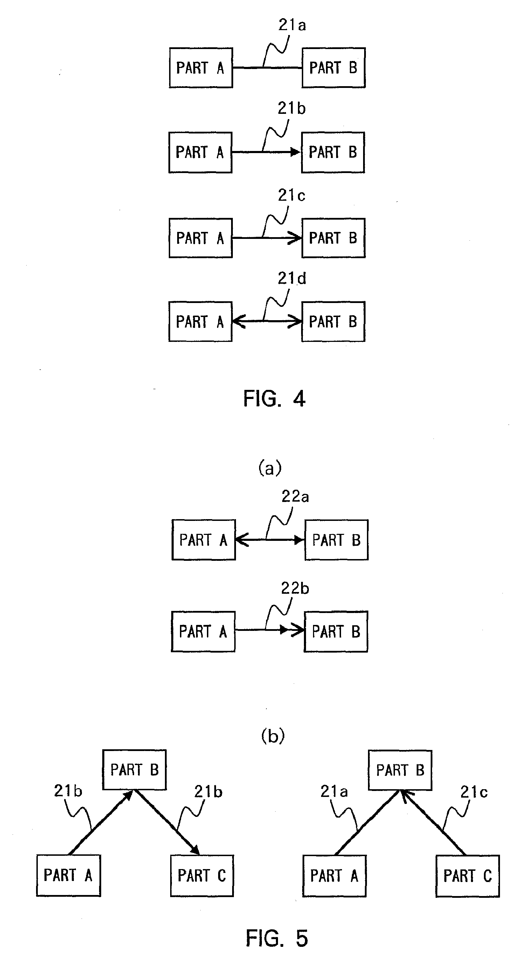

Figs. 4 to 6 are views illustrating installation topologies among the automotive parts. Fig. 4 shows four basic installation topologies. The solid line 21a indicates that an automotive part A and an automotive part B can both be removed independently. Such installation is referred to as "normal installation".

The arrow 21b indicates that the automotive part B should be removed before detachment of the automotive part A, that is to say, removal, attachment, or replacement of the automotive part B is necessary in order to remove, attach, or replace the automotive part A. Such installation is referred to as "conditional installation" (in this case, it is referred to that B is given priority).

The arrow 21c indicates that it is not necessary to record the Repair Time for the automotive part A when the automotive part B is removed or attached because the automotive part A is integrated to the automotive part B being removed, but the Repair Time for the automotive part A should be recorded when the automotive part B is replaced. Such installation is referred to as "parent-child installation" (in this case, it is referred to that B is parent).

The arrow 21d indicates that engagement between the automotive part A and the automotive part B can be disengaged only when the automotive part A is integrated with the automotive part B, that is, only after all automotive parts other than the automotive part A and the automotive part B are removed. Such installation is referred to as "parent-parent installation".

It should be noted that the basic installation topologies shown in Fig. 4 are illustrative only and are not necessarily limited to these examples. Other representations may also be used as long as the installation topologies can be represented clearly.

In this specification, two examples, removal/attachment and replacement, are given as the work items herein. The term "removal and attachment" as used in this specification refers to a procedure to remove the subject automotive part from the body and then attach it back. Any other automotive part attached to the subject automotive part is not removed and kept as it is. In addition, the term "replacement" refers to a procedure to remove the subject automotive part from the body, detach all other automotive parts attached to the subject automotive part removed, change the subject automotive part with another similar part, and then attach the latter automotive part to the body.

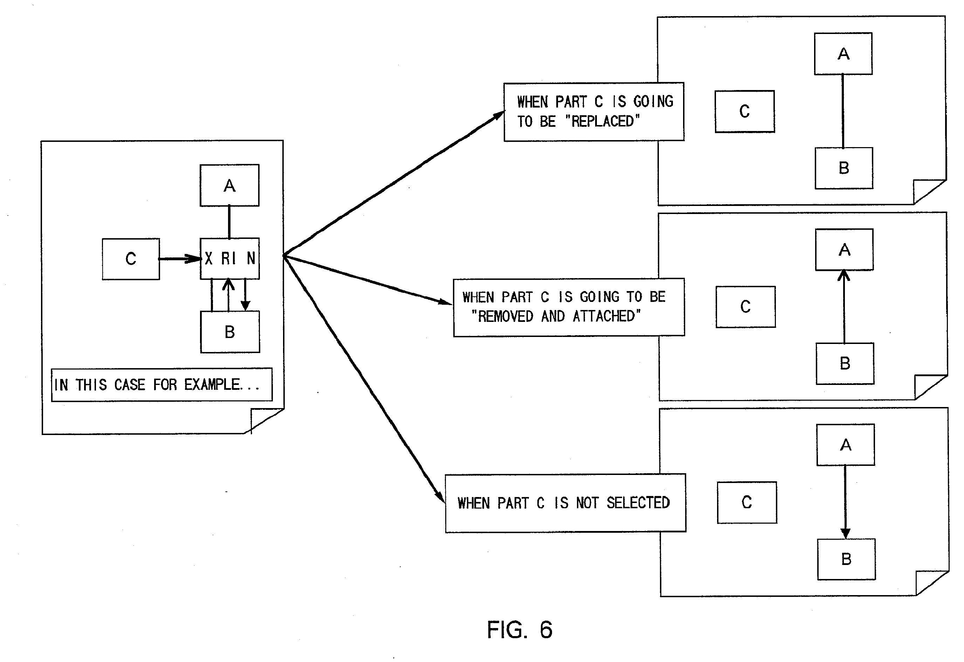

Fig. 5(a) shows examples of combinations of the basic installation topologies shown in Fig. 4. Each of the arrows 22a and 22b indicates a combination of the conditional installation (21b) and the parent-child installation (21c). The difference lies in which automotive part is going to be subjected. Fig. 5(b) shows examples of installation topologies among three or more automotive parts. Fig. 6 shows a case where installation condition would be determined depending on the selection of the automotive parts.

In this embodiment, before calculation of the labor time, the number of work processes, the idea of "the number of process steps" is adopted. The labor time is a function of the number of process steps. In this embodiment, for each installation topology, a labor time table is given in which the sum of the labor times is provided for the total number of process steps associated with all itemized repairs to all automotive parts involved in that installation topology.

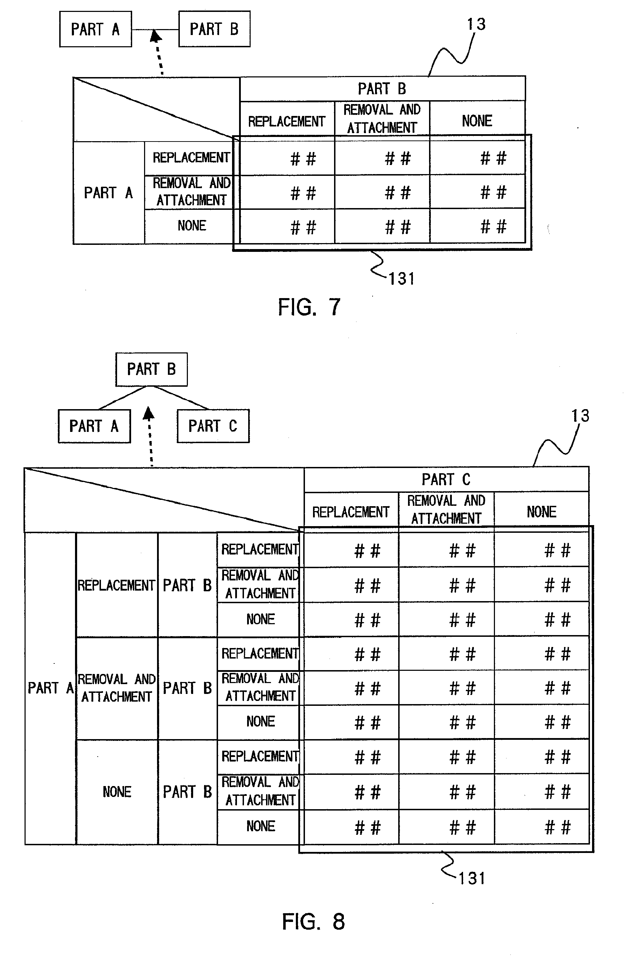

More specifically, as shown in an exemplified labor time table in Fig. 7, three options "replacement", "removal and attachment", and "not selected" for the work to two automotive parts provide up to nine (3 x 3 = 9) process steps. In addition, as shown in an exemplified labor time table in Fig. 8, three options "replacement", "removal and attachment", and "not selected" for the repair to three automotive parts provide up to twenty seven (3 x 3 x 3 = 27) process steps. The reason why two or more process steps are used for a single installation topology is that it is necessary to determine the number of process steps suitable for the reality because the details of the actual work may be different depending on the installation topology as described above. In the example according to this embodiment, the optimum one can be selected from the different process steps.

### [Tables]

The tables 11 to 15 stored in the storage unit 7 are described.

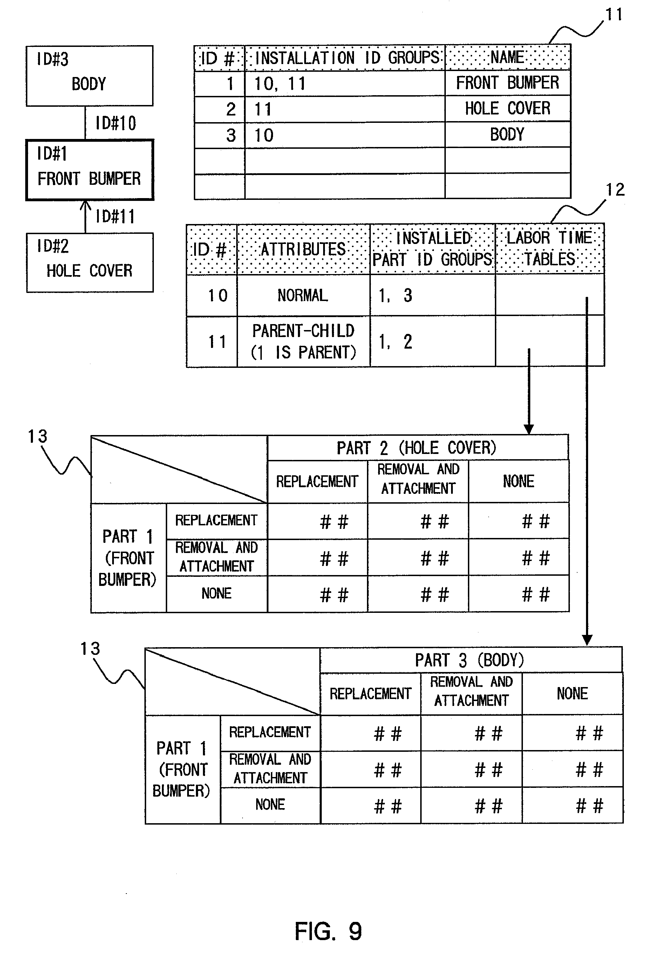

Fig. 9 shows examples of the parts table 11, the installation table 12, and the labor time table 13 for a case where a hole cover (automotive part ID2) is attached to a front bumper (automotive part ID1) in a parent-child installation manner (front bumper is parent), and the front bumper (automotive part ID1) is attached to the body (automotive part ID3) in a normal installation manner. The parts table 11 has entries for the automotive part IDs, installation IDs (group) for identifying the installation topology, and names of the automotive parts.

Although not illustrated herein, a cost table in which sourcing costs for each automotive part are stored such that they can be updated arbitrarily is related to the parts table 11 through the automotive part IDs.

The installation table 12 has entries for the installation IDs for identifying at least one installation topology out of multiple installation topologies, attributes of the installation topology, groups of the IDs of the automotive parts that are installed in the subject installation topology, and aforementioned labor time tables.

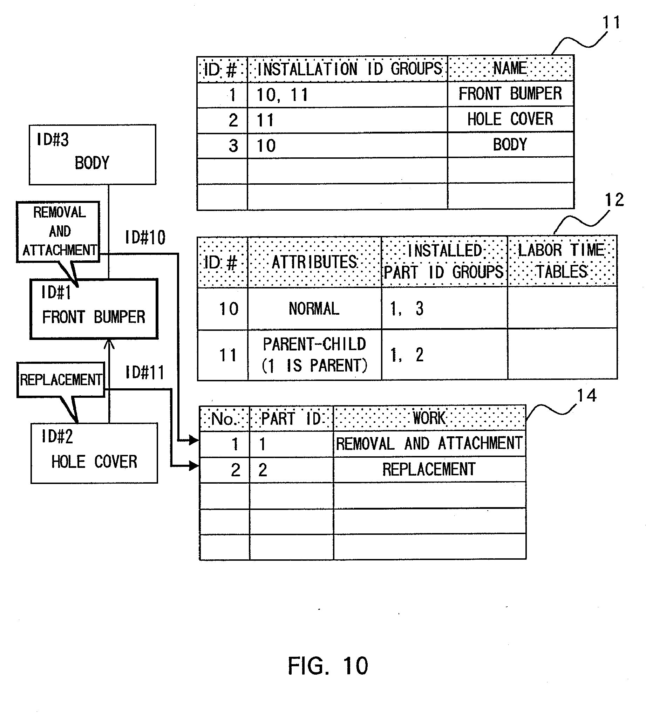

Fig. 10 shows examples of the tables for a case where details of the work to the automotive part (s) have been determined. For example, it is assumed that details of the repair work have been determined, i.e., the front bumper is going to be removed and attached, and the bumper hole cover is going to be replaced. The parts table 11 and the installation table 12 are as shown in Fig. 9. As a result of determination of the details of the work, contents of the estimate table 14 are also determined. The estimate table 14 is then provided with a sequential number (No.), the automotive part ID(s) for which the details of the repair work have been determined, and the work item ID(s) for identifying each repair work.

In this embodiment, the storage unit 7 stores the process step allocation table 15 therein that has an allocation rule that specifies how much labor time should be allocated to what kind of automotive part for each work, the allocation rule being in relation to the work item ID for identifying each work and the installation ID to which the subj ect automotive part is related. The content of the process step allocation table 15 (especially the allocation rule) is determined for each combination of the automotive part and the installation topology.

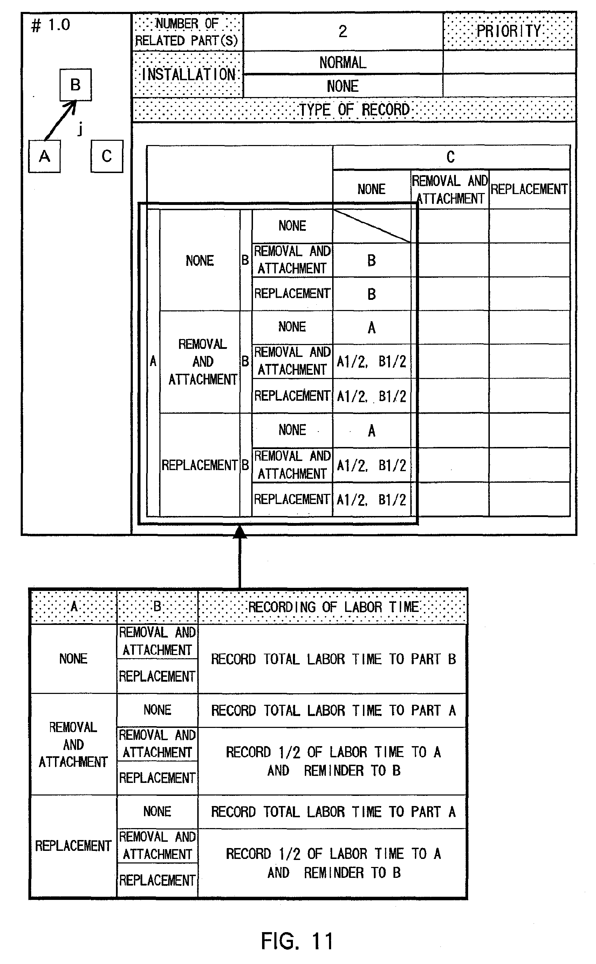

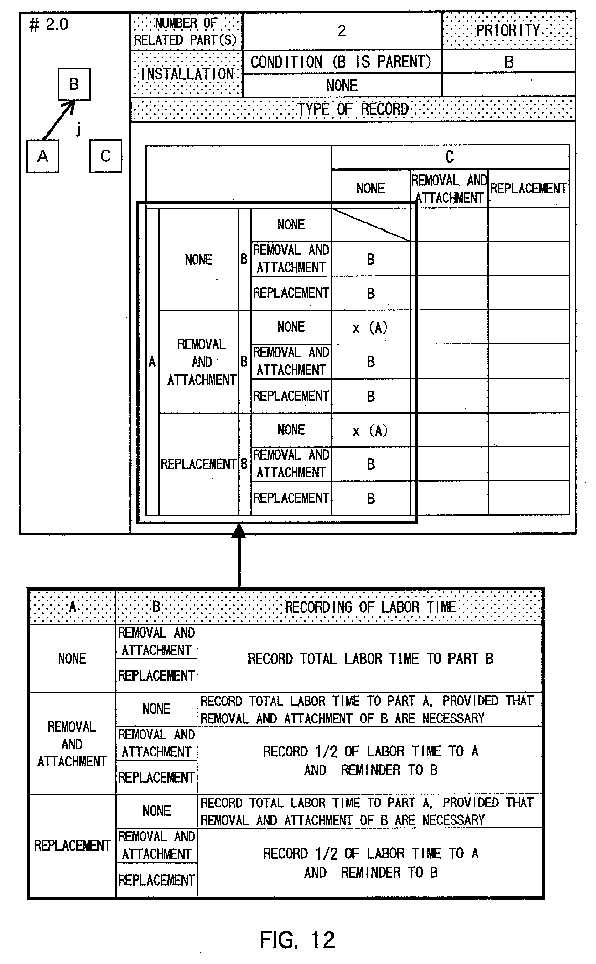

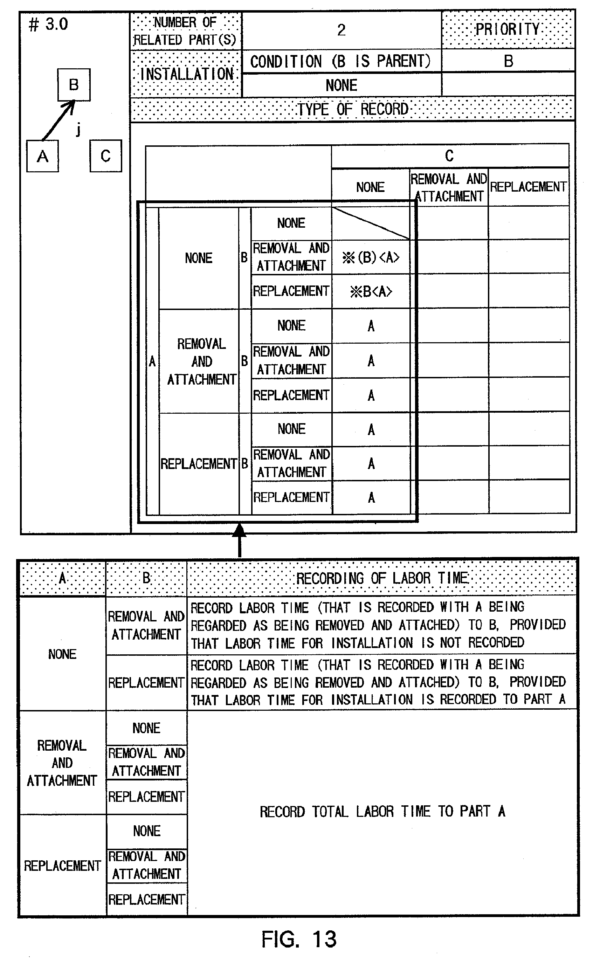

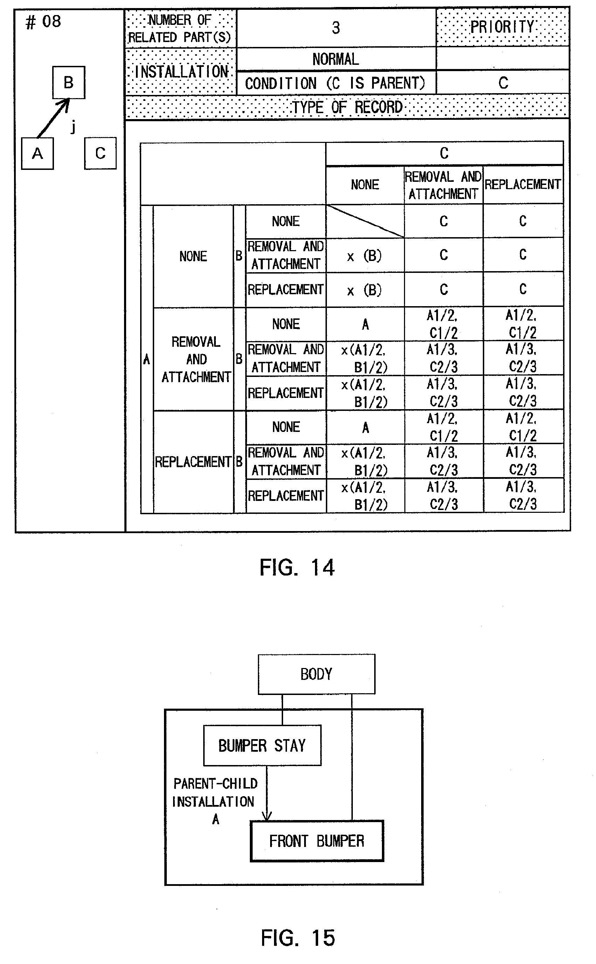

Fig. 11 shows an example where two automotive parts are installed in a normal installation manner. Fig. 12 shows an example where two automotive parts are installed in a conditional installation manner (B is given priority). Fig. 13 shows an example where two automotive parts are installed in a parent-child installation manner (B is parent). When there are three automotive parts, the process step allocation table 15 as shown in Fig. 14 is specified.

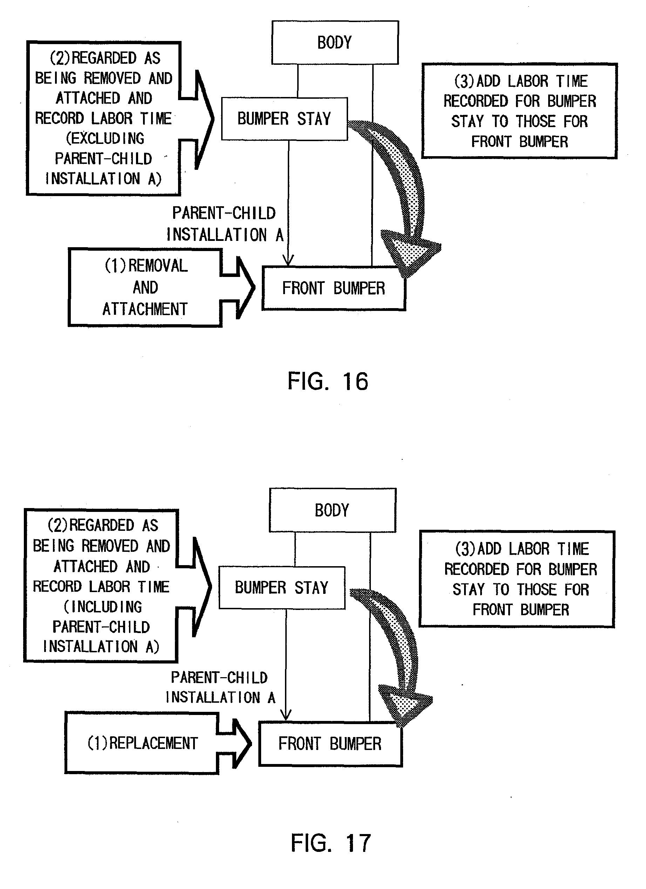

Referring to Fig. 13, there is a phrase "regarded as being removed and attached". The reason why a process step is added for the work represented by this kind of expression is described. As an example, it is assumed that the automotive parts and the installation topologies are as shown in Fig. 15 and only the front bumper is going to be removed and attached. As shown in Fig. 16, when the removal and attachment of the front bumper is specified, the bumper stay is also removed and attached along with the removal and attachment of the front bumper because the bumper stay is integrally connected to the front bumper in a parent-child installation manner (front bumper is parent). Accordingly, the bumper stay is regarded as being removed and attached and the process steps for these work items are added (excluding the process step for the parent-child installation) . Then, the process step for the bumper stay is added to those for the front bumper.

On the other hand, when the front bumper is going to be replaced, i.e., when the replacement of the front bumper is specified as shown in Fig. 17, the bumper stay should be removed and attached for the replacement of the front bumper because the bumper stay is integrated with the front bumper in a parent-child installation manner (front bumper is parent). Accordingly, the bumper stay is regarded as being removed and attached and the process steps for these items are added (including the process step for the parent-child installation). Next, the process step for the bumper stay is added to those for the front bumper.

As a result, the exact number of process steps can be calculated only by means of specifying the repair to the front bumper without considering whether or not the bumper stay should be removed/attached.

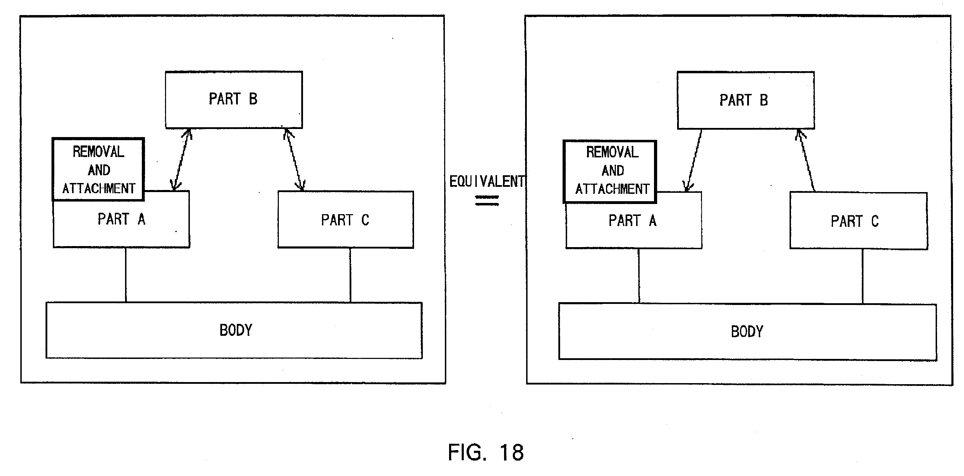

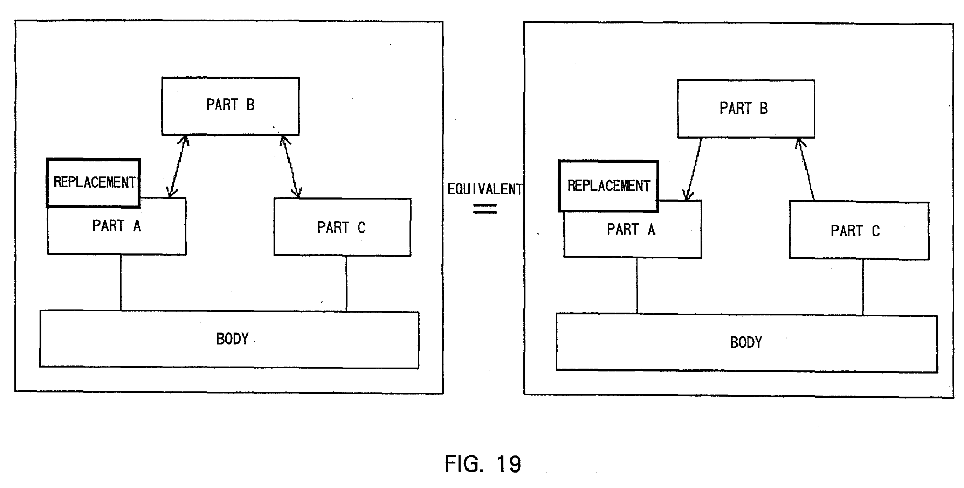

The same applies to the parent-parent installation. More specifically, in an example shown in Fig. 18, it is assumed that the automotive part A is specified to be removed and attached. The removal and attachment of the automotive part A involve the removal and attachment of an integral combination of the automotive parts A, B, and C. This means that the state of combination shown in a block on the right side of Fig. 18 is equivalent to the one on the left side thereof. Accordingly, the way to calculate the number of process steps as shown in Figs. 16 and 17 can also be applied to. Likewise, in an example shown in Fig. 19, replacement of the automotive part A indicates that the automotive parts A, B, and C are removed altogether and then the automotive part A is replaced, after which an integral combination of the automotive parts A, B, and C is attached. This means that the state of combination shown in a block on the right side of Fig. 19 is equivalent to the one on the left side thereof. Accordingly, the way to calculate the number of process steps as shown in Figs. 16 and 17 can also be applied to. The aforementioned work that is "regarded as being removed and attached" is hereinafter referred to as "deemed removal and attachment".

### [Operation of Automotive Labor Cost Estimation System]

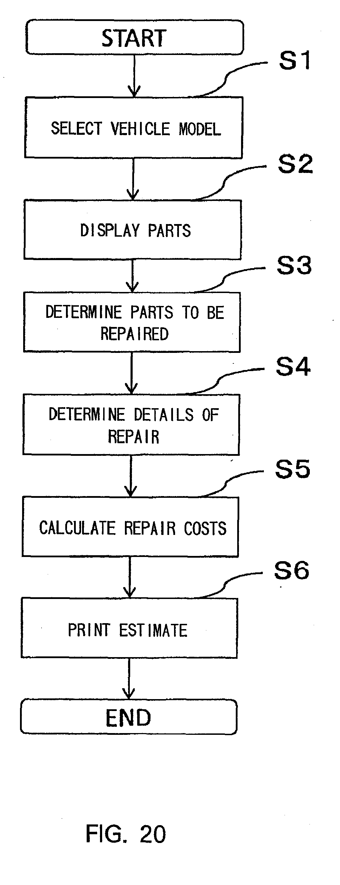

Next, described is an operation for estimating time, labor, and costs for repairs by using the aforementioned tables 11 to 15 in the automotive labor cost estimation system according to this embodiment. Flow charts in Fig. 20 and afterwards illustrate procedures of processing to be carried out by the central processing unit 6 by using a computer program stored in the ROM 9.

### [Entire Operation]

Fig. 20 shows an example of the entire operational procedure for the automotive labor cost estimation system 1.

In Fig. 20, a predetermined activation operation performed by a user with the input unit 3 produces a menu screen on the display unit 4 to allow the user to select the vehicle model. When the user selects the vehicle model on this menu screen, the system identifies the table (s) and the data that are associated with the vehicle model out of the tables 11 to 15 and the data stored in the storage unit 7 (step S1). In addition, the system produces an automotive part installation map on the display unit 4. The automotive part installation map schematically represents symbol images of the automotive parts required for the selected vehicle model and the installation topologies between/among the automotive parts. As an example, a screen as shown in Fig. 2 is produced.

When the automotive parts to be repaired are determined on the screen with the input unit 3 (step S3), and the details of the repair to the automotive parts to be repaired, such as removal and attachment or replacement, are provided directly or through the screen (step S4), the computer 2 (processing means) calculates repair costs (labor cost estimates) (step S5) . The repair costs are calculated on the basis of the Repair Time data generated from basic data stored in the tables 11 to 15 and the sourcing costs for each automotive part. The processing to generate the Repair Time data will be described later.

Then, the calculated repair costs are inserted into a predetermined format to generate an estimate, and the estimate is printed using the printer 5 (step S6).

### [Calculation of Repair Costs]

In the automotive labor cost estimation system 1 according to this embodiment, the repair costs are calculated in a characteristic fashion. A detailed procedure for calculating the repair costs at the step S5 is described below.

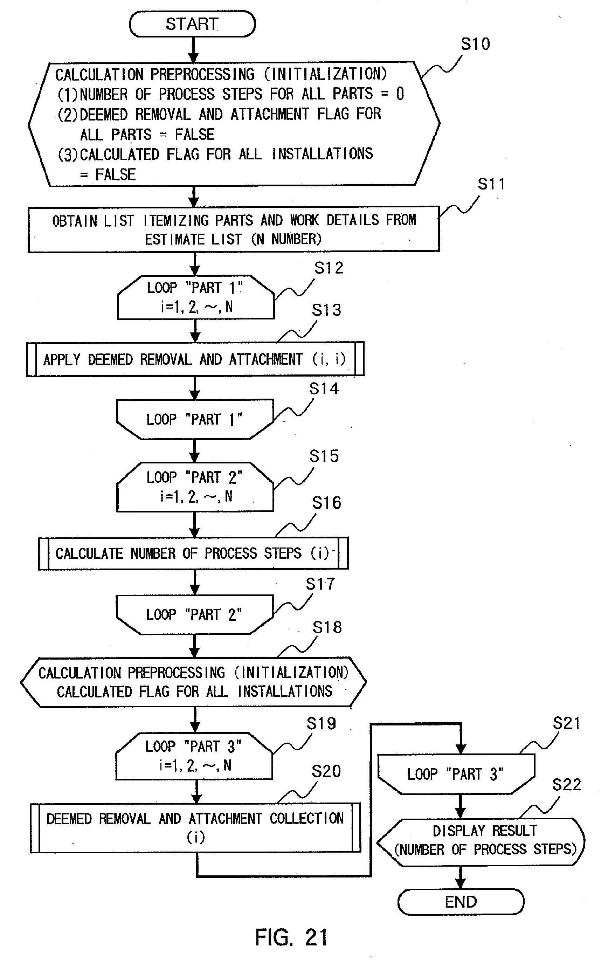

Fig. 21 is a flow chart illustrating how to calculate the total number of process steps for the repair.

At step S10, as a calculation preprocessing, necessary variables (parameters) are initialized. In other words, the number of process steps is reset to "0" for all automotive parts specified. A deemed removal and attachment flag is reset to "false" for all automotive parts. A calculated flag is reset to "false" for all installations. These flags are updated from "false" to "true" when the associated processing is performed.

At step S11, the automotive parts and work data are obtained from the estimate table 14 shown in Fig. 10. The estimate table 14 is a list itemizing automotive parts for which the number of process steps is required to be calculated, and details of the work (removal and attachment, replacement) related to those automotive parts. In the following description, the number of the automotive parts is represented as N number.

At step S12, an i-th (i = 1, 2 to N) automotive part ("Part 1") to which removal and attachment/replacement is applied is subjected to a procedure at step S13.

At the step S13, the "deemed removal and attachment flags" for all automotive parts in a deemed removal and attachment relation with the i-th automotive part (automotive parts that are not to be removed and attached/replaced out of child automotive parts in the parent-child relation) are updated to "true". Then, a "deemed removal and attachment application" subroutine is carried out to store which automotive part is an original parent. Details of the "deemed removal and attachment application" subroutine will be described later. At step S14, it is determined whether or not the "deemed removal and attachment application" subroutine has been carried out as to all of the N number of automotive parts. If all have been done, then the process proceeds to the subsequent steps. If not, the process returns to the step S12 to carry out the step S13 to the (i + 1) -th automotive part.

At step S15, the i-th (i = 1, 2 to N) automotive part ("Part 2") to which removal and attachment/replacement is applied is subjected to a procedure at step S16. The step S16 is a "number of process steps calculation" subroutine for calculating the number of process steps required for the i-th automotive part. Details of the "number of process steps calculation" subroutine will be described later.

At step S17, it is determined whether or not the "number of process steps calculation" subroutine has been carried out as to all of the N number of automotive parts. If all have been done, then the process proceeds to the subsequent steps. If not, the process returns to the step S15 to carry out the step S16 to the (i + 1)-th automotive part.

At step S18, the calculated flag for all installations are initialized again to "false". At step S19, the i-th (i = 1, 2 to N) automotive part ("Part 3") to which removal and attachment/replacement is applied is subjected to a procedure at step S20. The step S20 is a "deemed removal and attachment collection" subroutine for adding the number of process steps for the automotive parts in a deemed removal and attachment relation with the i-th automotive part (child automotive parts in the parent-child relation) into that of the i-th automotive part, that is, the parent automotive part. Details of the "deemed removal and attachment collection" subroutine will be described later.

At step S21, it is determined whether or not the "deemed removal and attachment collection" subroutine has been carried out as to all automotive parts (N number). If all have been done, then the process proceeds to the subsequent steps. If not, the process returns to the step S19 to carry out the step S20 to the (i + 1) -th automotive part. At step S22, the calculated number of process steps and the sourcing costs for each automotive part replaced are presented on the screen of the display unit 4. Besides, the results are stored in the storage unit 7.

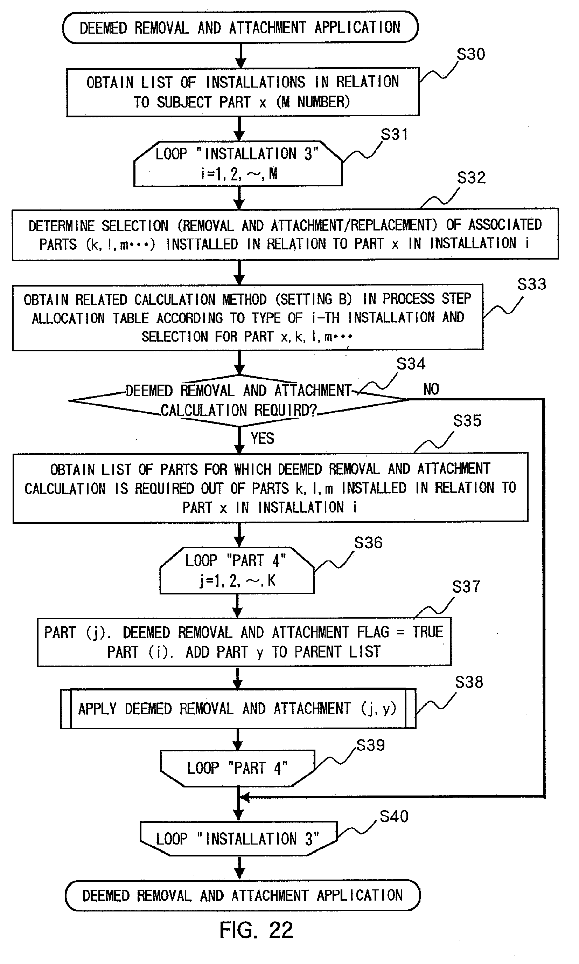

Fig. 22 is a detailed flow chart of the "deemed removal and attachment application" subroutine.

This subroutine has arguments x, y. The argument x represents an ID of the subject automotive part while the argument y represents an ID of a parent automotive part. The definition of the parent is as shown in Fig. 4.

In Fig. 22, at step S30, installation topology data are obtained from the installation table of the automotive part installed in relation to the subject automotive part x. In the following description, the number of installations in relation to the automotive part x is referred to the M number. At step S31, procedures at step S32 and afterwards are carried out to the i-th (i = 1, 2 to M) installation in relation to the automotive part x.

The step S32 determines the type of repair (removal and attachment/replacement) to the associated automotive parts (hereinafter, represented as k, 1, m, ...) that are installed in relation to the automotive part x in an i-th installation. The type of repair can be determined by using the estimate table. The deemed removal and attachment are considered as removal and attachment here.

At step S33, a calculation method in the process step allocation table 15 is obtained according to the type of i-th installation and the type of repair (removal and attachment/replacement) to the automotive parts ( k, 1, m, ...) that are installed in relation to that. The deemed removal and attachment are considered as removal and attachment here. At step S34, according to the calculation method obtained at the step S33, it is determined whether or not the deemed removal and attachment calculation is required. As a result, if the deemed removal and attachment calculation is determined to be required, the process proceeds to step S35. If not, the process proceeds to step S40.

The step S35 obtains, from the installation table, the automotive part data for which the deemed removal and attachment calculation is required, out of the automotive parts (k, l, m, ...) installed in relation to the automotive part x in an i-th installation. In the following description, the number of the automotive parts for which the deemed removal and attachment calculation is required is represented as the K number.

At step S36, procedures at step S37 and afterwards are carried out to the j-th (j = 1, 2 to K) automotive parts for which the deemed removal and attachment calculation is required. At the step S37, the deemed removal and attachment flag for the j-th automotive part is set to "true" and the automotive part Y is added to the installation table of the original parent automotive part installed in relation to the j-th automotive part. At step S38, it is necessary to determine whether there is any automotive part (that is to say, a child automotive part) for which further "deemed removal and attachment" is required from the j-th automotive part, the same subroutine is repeated. In this event, the ID of the original parent automotive part is entered as a variable y. At step S39, it is determined whether or not the steps S36 to S38 have been carried out as to all automotive parts (M number). If all have been done, then the process proceeds to the subsequent steps. If not, the process returns to the step S36 to carry out the steps S36 and afterwards to the (j + 1)-th automotive part.

At step S40, it is determined whether or not the steps S33 to S39 have been carried out as to all installations (M number) . If all have been done, then the process exits this subroutine. If not, the process returns to the step S33 to carry out the steps S33 and afterwards to the (i + 1)-th installations.

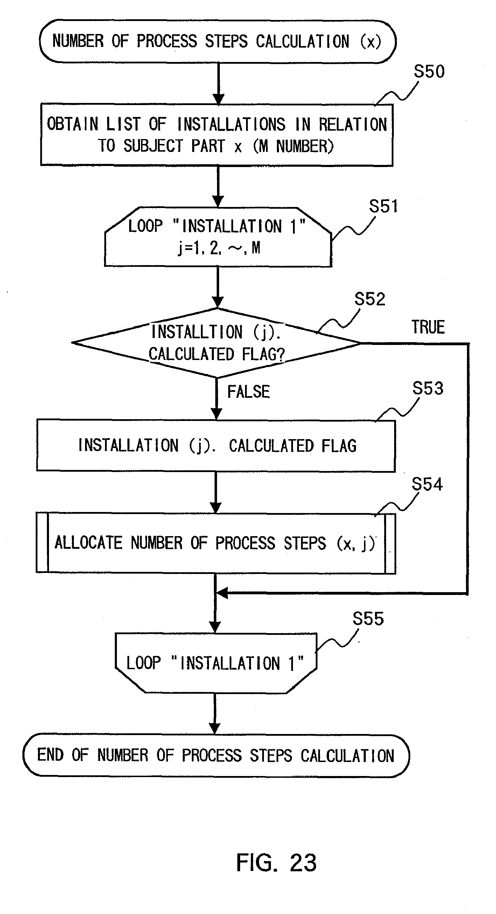

Fig. 23 is a detailed flow chart of the "number of process steps calculation" subroutine. This subroutine has an argument x. The argument x represents an ID of the subject automotive part. In Fig. 23, at step S50, installation topology data are obtained from the installation table of the automotive part installed in relation to the subject automotive part x. In the following description, the number of installations in relation to the automotive part x is referred to the M number. At step S51, procedures at step S52 and afterwards are carried out to the j-th (j= 1, 2 to M) installation in relation to the automotive part x.

The step S52 determines the state of the calculated flag for the j-th installation. If the calculated flag indicates "true", the process goes to step S55 while if it indicates "false", the process goes to step S53. The step S53 sets the calculated flag for the j -th installation to "true". At step S54, the "number of process steps allocation" subroutine is carried out to record the number of process steps for the j-th installation and the automotive part x.

At the step S55, it is determined whether or not the steps S52 to 54 have been carried out as to all installations (M number) . If all have been done, then the number of process steps calculation subroutine is terminated. If not, the process returns to the step S52 to carry out the steps S52 and afterwards to the (j + 1)-th installations.

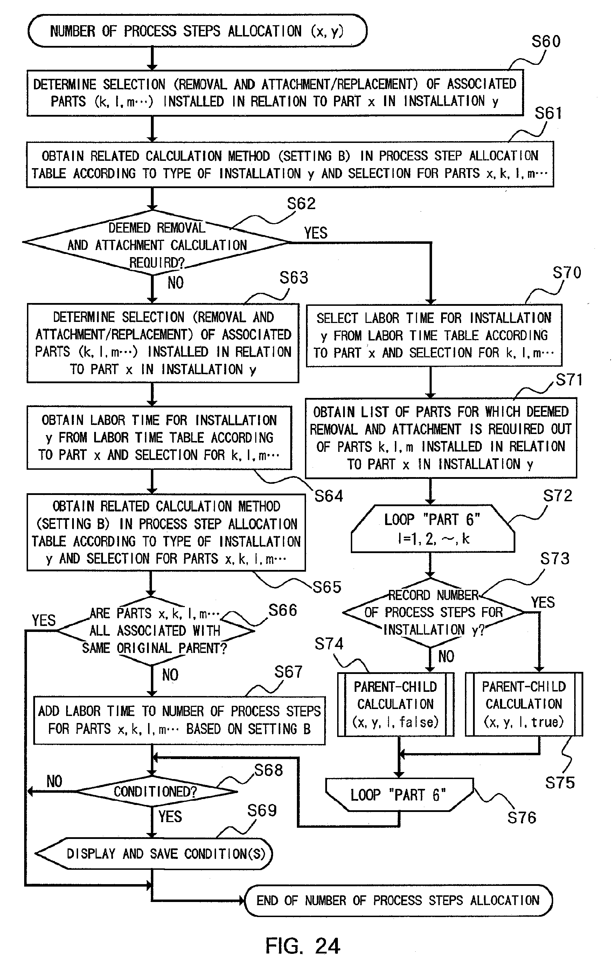

Fig. 24 is a detailed flow chart of the "number of process steps allocation" subroutine (step S54). This subroutine has arguments x, y. The argument x represents an ID of the subject automotive part while the argument y represents an ID of the installation in relation to the automotive part x.

In Fig. 24, step S60 determines the type of repair (removal and attachment/replacement) to the associated automotive parts (hereinafter, represented as k, l, m, ...) that are installed in relation to the automotive part x in installation y. This can be obtained from the estimate table. The deemed removal and attachment for the automotive part x are considered as removal and attachment, and the deemed removal and attachment for other automotive parts are considered as being no selection has been made.

At step S61, according to a combination of the type of installation y and the type of repair (removal and attachment/replacement) to the associated automotive parts (x, k, l, m, ...), a calculation method in the process step allocation table 15 is obtained. The deemed removal and attachment for the automotive part x are considered as removal and attachment, and the deemed removal and attachment for other automotive parts are considered as being no selection has been made.

Step S62 determines whether or not the deemed removal and attachment calculation is required. If it does, the process goes to step S70 while if not, the process goes to step S63. Whether or not the deemed removal and attachment calculation is required can be determined according to the calculation method in the process step allocation table 15 obtained at the step S61. That is, it can be determined whether or not the automotive part x serves as a parent to other automotive parts k, l, m, ...

The step S63 determines the type of repair (removal and attachment/replacement) to the associated automotive parts (k, l, m, ...) that are installed in relation to the automotive part x in installation y. The deemed removal and attachment for the automotive part x are considered as removal and attachment. Next, at step S64, according to the type of repair to the associated automotive parts (k, l, m, ...) that are installed in relation to the automotive part x in installation y, the number of process steps for the installation y is obtained from the labor time table. Here, the deemed removal and attachment are considered as removal and attachment. Next, at step S65, according to a combination of the type of installation y and the type of repair (removal and attachment/replacement) to the associated automotive parts (x, k, l, m, ...), a calculation method in the process step allocation table 15 is obtained. At step S66, it is determined whether or not the automotive parts x, k, l, m, ... are all associated with the same original parent. If the decision is affirmative, then it means that all the automotive parts are installed as a unit and the installation y does not require any detachment. Thus, the number of process steps is not recorded and the current subroutine is terminated. On the other hand, if the decision is negative, the process goes to step S67 to allocate the labor time to the automotive parts x, k, 1, m, ... based on the calculation method in the process step allocation table 15.

Step S68 determines whether or not there is any condition such as an automotive part that should be removed in advance. If the decision is affirmative, then the condition is presented and saved at step S69. If the decision is negative, the current subroutine is terminated.

On the other hand, at the step S70, according to the type of repair to the associated automotive parts (k, l, m, ...) that are installed in relation to the automotive part x in installation y, the number of process steps for the installation y is obtained from the labor time table. Here, the deemed removal and attachment for the automotive part x are considered as removal and attachment, and the deemed removal and attachment for other automotive parts are considered as being no selection has been made. Next, at step S71, a list of the automotive part IDs for which the deemed removal and attachment calculation is required is obtained, out of the automotive parts (k, l, m, ...) installed in relation to the automotive part x in installation y. In the following description, the number of the automotive parts for which the deemed removal and attachment calculation is required is represented as the K number.

At step S72, installation of the 1-th automotive part (1 =1, 2 to K) for which the deemed removal and attachment calculation is required is subjected to procedures at step S73 and afterwards. The step S73 determines whether or not it is necessary to record the number of process steps for the installation y according to the calculation method in the process step allocation table 15. If the decision is affirmative, then the argument is set to "true" at step S74 and a "parent-child calculation" subroutine is carried out. If the decision is negative, the argument is set to "false" at step S75 and the "parent-child calculation" subroutine is carried out. At step S76, it is determined whether or not the steps S73 to S75 have been carried out as to all automotive parts (K number). If all have been done, then the process goes to the step S68. If not, the process returns to the step S73 to carry out the procedures at the step S73 and afterwards to the (1 + 1)-th automotive part.

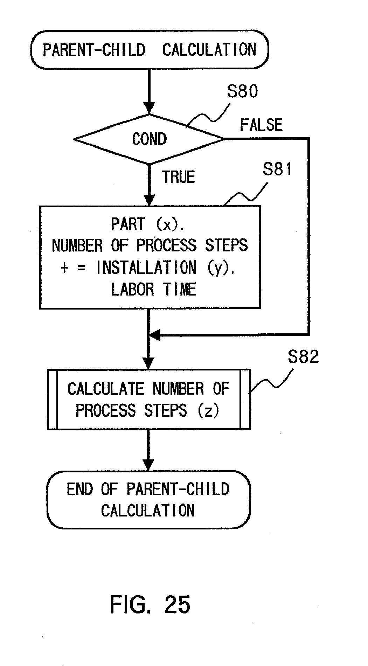

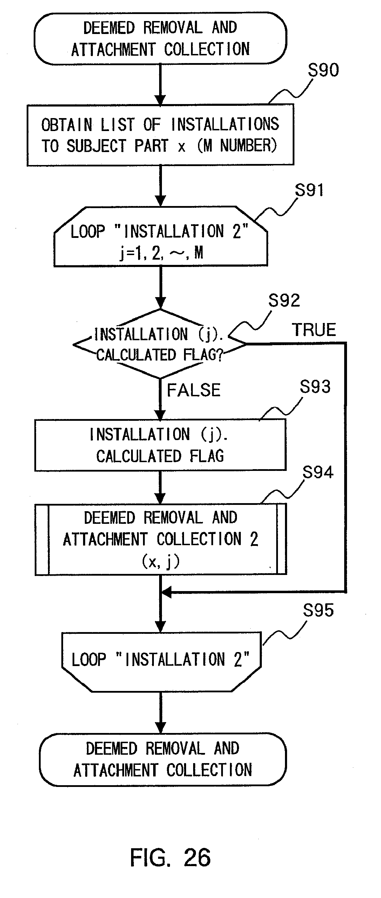

Fig. 25 is a detailed flow chart of the "parent-child calculation" subroutine. This subroutine has arguments x, y, z, and cond. The arguments x and z represent IDs of the automotive parts. The automotive part x serves as a parent. The argument y represents an ID of installation to the automotive parts x and z. The argument cond represents whether or not ("true"/"false") the installation y is added to the number of process steps for the automotive part x. In Fig. 26, at step S80, the value of the arguments cond is determined. If the value represents "true", then the process goes to step S81. If the value represents "false", the process proceeds to step S82. At the step S82, the number of process steps for the installation y is added to those of the automotive part x. At step S83, the deemed removal and attachment calculation is performed whenever the "parent-child calculation" subroutine is executed (see Fig. 25). In this case, the "number of process steps calculation" subroutine is again performed.

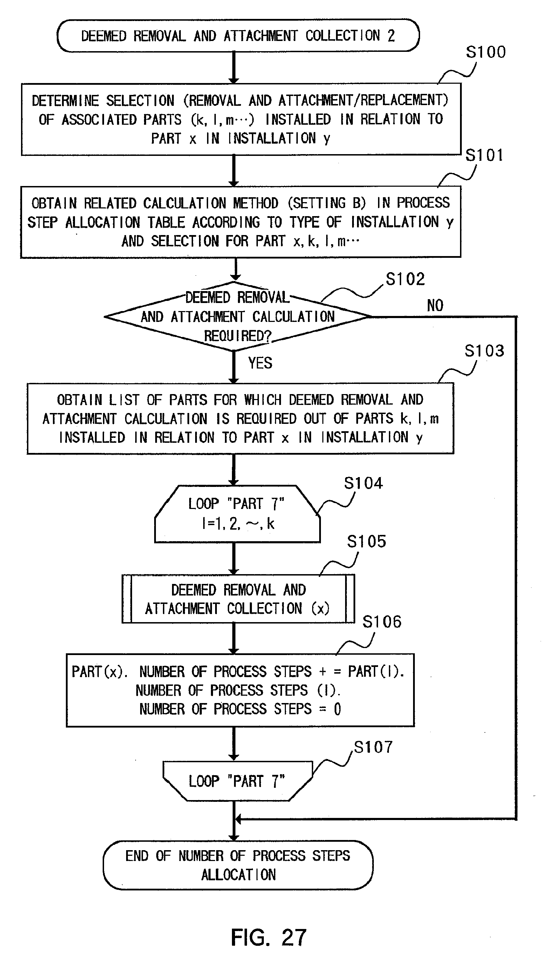

Fig. 26 is a detailed flow chart of the "deemed removal and attachment collection" subroutine. This subroutine has an arguments x in which the argument x represents an ID of the subj ect automotive part. In Fig. 27, at step S90, the ID data for the installation to the subject automotive part x is obtained from the installation table. In the following description, the number of the installations is represented as the M number.

At step S91, procedures at step S92 and afterwards are carried out to the j-th installation (j = 1, 2 to M). The step S92 checks the value of the calculated flag for the j-th installation. If the value represents "true", then it means that the flag has already been calculated. Thus, no calculation is performed for that installation and the process goes to step S95. On the other hand, if the value represents "false", the calculation has not yet been performed. Thus, the value of the calculated flag for the j-th installation is set to "true" at the step S93 and a "deemed removal and attachment collection 2" subroutine is carried out at step S94. At the step S95, it is determined whether or not the steps S92 to 94 have been carried out as to all installations (M number). If all have been done, then subroutine is terminated. If not, the process returns to the step S92 to perform the procedures at the step S92 and afterwards to the (j + 1)-th automotive part.

Fig. 27 is a detailed flow chart of the "deemed removal and attachment collection 2" subroutine. This subroutine has arguments x and y. The argument x represents an ID of the subject automotive part while the argument y represents an ID of installation. This subroutine is for collecting the number of process steps into those of the automotive part x, when there is any deemed removal and attachment procedure for a group of automotive parts that are installed in relation to the automotive part x in installation y.

In Fig. 27, step S100 determines the type of repair (removal and attachment/replacement) to the associated automotive parts (hereinafter, represented as k, l, m, ...) that are installed in relation to the automotive part x in installation y. This can be obtained from the estimate table. The deemed removal and attachment for the automotive part x are considered as removal and attachment, and the deemed removal and attachment for other automotive parts are considered as being no selection has been made. At step S101, according to a combination of the type of installation y and the type of repair (removal and attachment/replacement) to the associated automotive parts (x, k, l, m, ...), a calculation method in the process step allocation table 15 is obtained. The deemed removal and attachment for the automotive part x are considered as removal and attachment, and the deemed removal and attachment for other automotive parts are considered as being no selection has been made. Step S102 determines whether or not the deemed removal and attachment calculation is required. If it does, the process goes to step S103. If not, the subroutine is terminated. Whether or not the deemed removal and attachment calculation is required can be determined according to the calculation method in the process step allocation table 15 obtained at the step S101. That is, it can be determined whether or not the automotive part x serves as a parent to other automotive parts k, l, m, ... At step S103, a list of the automotive part IDs for which the deemed removal and attachment calculation is required is obtained, out of the automotive parts (k, l, m, ...) installed in relation to the automotive part x in installation y. In the following description, the number of the automotive parts for which the deemed removal and attachment calculation is required is represented as the K number.

At step S104, the 1-th automotive part (1 = 1, 2 to K) is subjected to procedures at step S105 and afterwards. At the step S105, the "deemed removal and attachment collection" subroutine is performed. At step S106, the number of process steps recorded for the automotive part 1 is added to the number of process steps for the automotive part x, and the number of process steps for the automotive part 1 is reset to zero. This merges the number of process steps recorded for the automotive part 1 with the number of process steps for the automotive part x. At step S107, it is determined whether or not the steps S105 to S106 have been carried out as to all automotive parts (Knumber). If all have been done, then subroutine is terminated. If not, the process returns to the step S105 to carry out the procedures at the step S105 and afterwards to the (1 + 1)-th automotive part.

As apparent from the above, in the automotive labor cost estimation system 1, the storage unit 7 stores therein the installation table 12 having at least one installation topology or a combination of two or more installation topologies, of normal installation, conditional installation, parent-child installation, and parent-parent installation topologies, which are stored in relation to the installation IDs and the automotive part IDs; the process step allocation table 15 having allocation rules indicative of how much labor time should be allocated to which automotive part for each work item, which are stored in relation to the work item IDs and the installation IDs to which the subject automotive part is related; and the table having sourcing costs for each automotive part in relation to the automotive part IDs. In response to an input about the automotive parts to be repaired (vehicle ID) and the details of the work (work item ID), the installation ID in relation to the subject automotive part ID is retrieved from the installation table 12. Then, the process step allocation table 15 defined for the retrieved installation ID is determined to generate Repair Time data according to the labor time allocated in that table. Then, the sourcing costs are read out of the table that is in relation to the subject automotive part ID. The repair costs are calculated according to the sourcing costs and the Repair Time data. Therefore, the repair costs can reflect the actual installation topology and the work items for the automotive part.

In addition, during the removal and attachment or replacement of a certain automotive part, when any other automotive part than the subject automotive part is associated with, the labor time is allocated with the other automotive part being considered to be removed and attached, in addition to the labor time required for the removal and attachment or replacement of the subject automotive part. As a result, the Repair Time data for any automotive parts in a parent-child or parent-parent relation become much more realistic.

In addition, the system has the symbol images representing in a symbolic manner the normal installation, conditional installation, parent-child installation, and parent-parent installation topologies or combined installation topologies of two or more of them with which each automotive part is installed in relation to a plurality of automotive parts as well as the automotive part map in which these symbol images are represented in perspective. The symbol images or the automotive part map is presented on the display unit 4. This can advantageously eliminate possibilities of overlaps and omissions in estimated items as well as recording of unnecessary number of process steps. In other words, conventional repair cost estimation system of the type described do not keep work procedure information, so that it is impossible to find unnecessary automotive part(s) or work item(s), if any, by the system during the time when the automotive part (s) and the details of the work are determined. On the other hand, in the automotive labor cost estimation system 1 according to this embodiment, correct work procedures can be recognized, which eliminates possibilities of overlaps and omissions in estimated items as well as recording of unnecessary number of process steps.

Furthermore, a technician is informed of work procedures associated with the subject automotive part through the display image.

Moreover, by means of specifying a symbol image or images in the automotive part map presented on the automotive part map that can be presented on the display unit 4, an input of the automotive part ID corresponding to that symbol image can be provided, which makes it much easier to generate Repair Time data and estimate repair costs.

It should be noted that the configuration of the automotive labor cost estimation system 1 of the present invention is not limited to the one illustrated in this embodiment. Instead, various changes and modifications may be made. For example, allocation of the number of process steps designated in the process step allocation table 15 is not limited to the one illustrated in Figs. 11 to 14. Instead, any allocation for the labor time to the automotive parts may be used as long as the allocation can be made according to the installation topology.

## Claims

1. A Repair Time data generation system for generating Repair Time data to be used as a rough indication of a labor time associated with maintenance or repair of a vehicle, comprising:
a first table having an installation topology among a number of automotive parts mounted on said vehicle, the installation topology being of at least one or a combination of two or more of: a normal installation topology in which any and all automotive parts can be removed independently, a conditional installation topology in which removal and attachment or replacement of one automotive part is necessary in order to remove, attach, or replace the other automotive part, a parent-child installation topology in which it is not necessary to work with one automotive part in order to remove and attach the other automotive part, but the labor time should be recorded for the one automotive part when the other automotive part is to be replaced, and a parent-parent installation topology in which one automotive part or the other automotive part can be removed only after all automotive parts other than one and the other automotive parts are removed, the installation topology being stored in the first table in relation to an installation ID for identifying the installation topology as well as an automotive part ID for identifying the automotive part(s) in relation to that installation topology;
a second table having an allocation rule that specifies how much labor time should be allocated to what kind of automotive part for each work, the allocation rule being in relation to a work item ID for identifying each work and the installation ID to which the subject automotive part is related;
input reception means for receiving an input about the subject automotive part ID and the work item ID; and
processing means for retrieving the installation ID in relation to the received automotive part ID from said first table, determining said second table defined to the retrieved installation ID that is in relation to said work item ID, and generating said Repair Time data based on the labor time allocated in the defined second table.

2. The Repair Time data generation system as claimed in Claim 1, wherein in said second table, during the removal and attachment or replacement of a certain automotive part, when any other automotive part than the subject automotive part is associated with, a labor time is allocated with said other automotive part being considered to be removed and attached, in addition to the labor time required for the removal and attachment or replacement of said automotive part.

3. The Repair Time data generation system as claimed in Claim 2, wherein said second table has said installation ID about an installation topology for installing three or more automotive parts.

4. The Repair Time data generation system as claimed in Claim 1, 2 or 3, further comprising:
image data holding means for holding symbol images representing in a symbolic manner said normal installation topology, said conditional installation topology, said parent-child installation topology, and said parent-parent installation topology or combined installation topologies of two or more of them with which each automotive part is installed in relation to a plurality of automotive parts, and holding an automotive part map in which these symbol images are represented in perspective; and
display controlling means for presenting, on a predetermined display unit, the symbol images or said automotive part map held in this image data holding means.

5. The Repair Time data generation system as claimed in Claim 4, wherein, by means of specifying a symbol image in saidautomotive part map presented on said display unit, said input reception means is adapted to receive an input of the automotive part ID corresponding to that symbol image.

6. An automotive labor cost estimation system for estimating an auto labor costs based on Repair Time data to be used as a rough indication of a labor time associated with maintenance or repair of a vehicle, and sourcing costs for each automotive part, comprising:
a first table having an installation topology among a number of automotive parts mounted on said vehicle, the installation topology being of at least one or a combination of two or more of: a normal installation topology in which any and all automotive parts can be removed independently, a conditional installation topology in which removal and attachment or replacement of one automotive part is necessary in order to remove, attach, or replace the other automotive part, a parent-child installation topology in which it is not necessary to work with one automotive part in order to remove and attach the other automotive part, but the labor time should be recorded for the one automotive part when the other automotive part is to be replaced, and a parent-parent installation topology in which one automotive part or the other automotive part can be removed only after all automotive parts other than one and the other automotive parts are removed, the installation topology being stored in the first table in relation to an installation ID for identifying the installation topology as well as an automotive part ID for identifying the automotive part(s) in relation to that installation topology;
a second table having an allocation rule that specifies how much labor time should be allocated to what kind of automotive part for each work, the allocation rule being in relation to a work item ID for identifying each work and the installation ID to which the subject automotive part is related;
a third table having the sourcing costs for each automotive part stored in relation to said automotive part ID;
input reception means for receiving an input about the subject automotive part ID and the work item ID; and
processing means for retrieving the installation ID in relation to the received automotive part ID from said first table, determining said second table defined to the retrieved installation ID that is in relation to saidwork item ID, generating said Repair Time data based on the labor time allocated in the defined second table, retrieving the sourcing costs from the third table in relation to said automotive part ID, and calculating said auto labor costs based on the sourcing costs and said Repair Time data.

7. A computer program for use in directing a computer having a storage unit to operate as a Repair Time data generation system for generating Repair Time data to be used as a rough indication of a labor time associated with maintenance or repair of a vehicle, wherein:
said computer program
makes said storage unit to store a first table having an installation topology among a number of automotive parts mounted on said vehicle, the installation topology being of at least one or a combination of two or more of: a normal installation topology in which any and all automotive parts can be removed independently, a conditional installation topology in which removal and attachment or replacement of one automotive part is necessary in order to remove, attach, or replace the other automotive part, a parent-child installation topology in which it is not necessary to work with one automotive part in order to remove and attach the other automotive part, but the labor time should be recorded for the one automotive part when the other automotive part is to be replaced, and a parent-parent installation topology in which one automotive part or the other automotive part can be removed only after all automotive parts other than one and the other automotive parts are removed, the installation topology being stored in the first table in relation to an installation ID for identifying the installation topology as well as an automotive part ID for identifying the automotive part(s) in relation to that installation topology; and a second table having an allocation rule that specifies how much labor time should be allocated to what kind of automotive part for each work, the allocation rule being in relation to a work item ID for identifying each work and the installation ID to which the subject automotive part is related; and
makes said computer to function as input reception means for receiving an input about the subject automotive part ID and the work item ID; and processing means for retrieving the installation ID in relation to the received automotive part ID from said first table, determining said second table defined to the retrieved installation ID that is in relation to said work item ID, and generating said Repair Time data based on the labor time allocated in the defined second table.
